# FASCICULE DE BREVET EUROPEEN

(11) **EP 3 670 326 B1**
(45) Date de publication et mention de la délivrance du brevet: **04.12.2024**
(21) Numéro de dépôt: 19217050.4
(22) Date de dépôt: 17.12.2019
(51) Int. Cl.: B64C 1/06, H01R 13/73, B64C 1/40

(54) **PANNEAU DE REVÊTEMENT MURAL POUR AÉRONEF À ISOLATION INTÉGRÉE**
WANDVERKLEIDUNGSPANEEL FÜR LUFTFAHRZEUG MIT INTEGRIERTER ISOLIERUNG
WALL COVERING PANEL FOR AIRCRAFT WITH BUILT-IN INSULATION

(30) Priorité: 20.12.2018 FR 1873532
(43) Date de publication de la demande: 24.06.2020
(73) Titulaire: Airbus Operations, 31060 Toulouse (FR)
(72) Inventeur: GUERING, Bernard, 31850 Montrabe (FR); DELAHAYE, Romain, 31770 Colomiers (FR)
(74) Mandataire: Gevers & Orès

(56) Documents cités:
- EP-A1- 1 510 454
- EP-A1- 3 083 394
- EP-A1- 3 222 513
- WO-A1-2018/060186
- GB-A- 2 517 465

## Description

L'invention concerne un panneau de revêtement mural pour aéronef, particulièrement adapté à la finition de la pointe avant d'un aéronef de transport de passager, notamment à la finition d'une partie supérieure de la pointe avant.

Dans la pointe avant d'un aéronef connu, on trouve, de l'intérieur vers l'extérieur de l'aéronef (c'est-à-dire selon une direction centrifuge) :
- des panneaux d'habillage (liner), qui sont désormais principalement réalisés en matériau composite (carbone par exemple) puis décoré par peinture ou application d'un film décoratif,
- divers éléments de systèmes, en particulier des éléments de circuits électriques et des éléments de circuit d'air
- une couche d'isolation,
- la structure primaire de l'aéronef (dont des cadres).

Les éléments de systèmes et la couche d'isolation sont individuellement et directement fixés sur la structure primaire de l'aéronef à l'aide d'attaches dédiées.

Ainsi l'équipement et la finition d'une pointe avant d'aéronef requièrent un très grand nombre de pièces (supports fixes et mobiles) et d'opérations d'installation avant la mise en place finale du panneau d'habillage lui-même (qui est lui aussi fixé sur la structure primaire de l'aéronef à l'aide d'attaches dédiées). L'équipement et la finition de la pointe avant de l'aéronef est un poste de fabrication qui prend beaucoup de temps.

On connaît, par le document WO2018/060186 A1, un élément de paroi de cabine pour l'isolation thermique et acoustique d'un tronçon de fuselage d'aéronef. Cet élément de paroi comporte une paroi externe pourvue d'un matériau isolant, une paroi interne et, entre les parois interne et externe, un conduit destiné à guider un flux d'air entre le plancher et le plafond de l'aéronef.

L'invention vise à pallier ces inconvénients en proposant un panneau de revêtement mural à intégration rapide.

Pour ce faire, l'invention propose un panneau de revêtement mural pour aéronef, l'aéronef ayant une structure primaire. Le panneau est défini dans la revendication 1.

Ainsi le panneau selon l'invention intègre, en un seul ensemble solidaire autoportant, à la fois la fonction de finition (décoration) et la fonction d'isolation et il est configuré pour pouvoir intégrer, sans modification notable, des portions de route électrique et fluidique. Dans l'art antérieur, les fonctions de finition et d'isolation sont remplies par un liner (plaque rigide) d'une part et par un panneau isolant d'autre part, liner et panneau isolant qu'il convient de fixer l'un après l'autre à la structure primaire de l'aéronef par des attaches dédiées. Avec un panneau selon l'invention, il n'est pas nécessaire de fixer le matelas isolant à la structure primaire de l'aéronef. L'invention permet donc de réduire le nombre de pièces constitutives de l'aéronef, le nombre d'attaches et le nombre d'opérations nécessaires à l'équipement et à la finition de la pointe avant et en particulier du cockpit de l'aéronef. Il en résulte une réduction de la masse de l'aéronef et une simplification de la fabrication, et donc aussi une baisse des coûts.

Selon l'invention, au moins l'une des portions de route du panneau (il peut s'agir d'une portion de route fluidique ou électrique) s'étend du premier bord à un deuxième bord du panneau, la portion de route traversant alors le panneau. Dans toute la suite une telle portion de route est dite traversante. Le panneau de revêtement mural comprend alors un deuxième élément de connexion dans le deuxième bord pour la connexion de la portion de route traversante à une autre portion de route (portion de route aval) du même circuit, portée par un panneau adjacent.

En variante, le panneau de revêtement mural intègre au moins un équipement de sortie (électrique ou fluidique) et l'une des portions de route (électrique ou fluidique) s'étend du premier bord à l'équipement de sortie, le circuit se terminant alors dans le panneau par cette portion de route et cet équipement de sortie. Dans toute la suite une telle portion de route est dite terminale. Un équipement de sortie est par exemple une bouche de ventilation, un éclairage, un coffret de stockage de matériels divers, etc.

Bien entendu, un panneau de revêtement mural selon l'invention peut comprendre une première portion de route traversante et une deuxième portion de route terminale, ou plusieurs portions de route traversantes et plusieurs portions de route terminales se terminant par des équipements de sortie divers intégrés au panneau.

Selon une caractéristique possible de l'invention, la face arrière et la face avant de la plaque cellulaire sont de simples parois lisses. Si nécessaire, une telle plaque cellulaire à faces lisses est complétée par des nervures de renfort mécanique prévues sur sa face arrière.

De préférence, les ailettes internes de la plaque cellulaire sont percées de trous de drainage permettant la communication entre cellules voisines, afin d'éviter une étanchéité parfaite des conduits formés par les ailettes internes, qui pourrait être problématique compte tenu des variations de pression du cockpit lors des différentes phases de vol ; aussi et surtout, ces trous permettent un drainage des eaux de condensation vers le bas de la plaque.

La plaque cellulaire du panneau selon l'invention est avantageusement obtenue par impression 3D. Lorsqu'elles sont prévues, les nervures de renfort mécanique sont obtenues par le même procédé lors d'une même étape de fabrication de la plaque cellulaire.

Un autre avantage de l'invention est que la structure alvéolaire de la plaque cellulaire de l'ossature porteuse (de préférence avec nervures de renfort mécanique), du fait de sa très grande rigidité et de sa très grande inertie en flexion, permet de limiter les points de fixation avec la structure primaire de l'aéronef. Quatre points de fixation répartis aux quatre coins de la plaque cellulaire (considérant un panneau de forme globale rectangulaire, que celui-ci soit plan ou incurvé) suffisent dans la majeure partie des cas. Des gains considérables en termes de masse, de temps et de coûts de fabrication sont ainsi réalisés.

Selon une caractéristique possible de l'invention, les conduits de la plaque cellulaire qui ne sont pas utilisés comme portion de route fluidique sont fermés par des cabochons au niveau des bords de l'ossature porteuse.

Selon une caractéristique possible de l'invention, le matelas isolant phonique et/ou thermique est un bloc de mousse rigide. Un tel bloc est stable en dimensions et jeux par rapport aux éventuels équipements de sortie fixés à la face arrière de l'ossature porteuse, de sorte que tout risque d'usure par frottement (*fretting)* est évité. Le volume du bloc de mousse prend avantageusement en compte la capacité d'isolation thermique et phonique de l'ossature porteuse.

De préférence, le bloc de mousse rigide est muni à sa périphérie d'une bande de mousse souple permettant d'assurer la jonction avec l'environnement direct du panneau de revêtement mural et de réaliser un joint entre les matelas isolants de deux panneaux adjacents.

L'invention s'étend à un aéronef ayant une pointe avant équipée de panneaux de revêtement mural selon invention.

Selon une caractéristique possible de l'aéronef, il comprend des bandes de jonction pourvues d'un complément d'isolation entre panneaux adjacents.

Selon une caractéristique possible de l'aéronef, il comprend une structure primaire et l'ossature porteuse de chaque panneau est fixée à la structure primaire de l'aéronef en quatre points d'attache, répartis à quatre coins du panneau.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs.
La figure 1 est une vue schématique de profil d'un aéronef dans lequel l'invention peut être mise en oeuvre.
La figure 2 est une vue schématique en perspective, de 3/4 dessus, de la pointe avant d'un aéronef tel celui de la figure 1.
La figure 3 est une vue schématique en perspective, de 3/4 face, d'un panneau de revêtement mural.
La figure 4 est une vue schématique éclatée en perspective, de 3/4 dos, du panneau de revêtement mural de la figure 3.
La figure 5 est une vue schématique en perspective d'une portion de la plaque cellulaire de l'ossature porteuse d'un panneau de revêtement mural selon l'invention.
La figure 6 est une vue schématique en coupe transversale de l'ossature porteuse de la figure 5.
Les figures 7 à 9 sont des vues schématiques en perspective d'éléments de connexion électrique à la jonction entre deux panneaux adjacents.
La figure 10 est une vue schématique de face d'une variante d'éléments de connexion électrique à la jonction entre deux panneaux adjacents.
La figure 11 est une vue en coupe des éléments de connexion électrique illustrées aux figures 7 à 9.
La figure 12 est une vue en perspective, de 3/4 face, de la jonction entre deux panneaux adjacents avec des éléments de connexion électrique et des éléments de connexion d'un circuit de ventilation,
La figure 13 est une vue schématique en perspective d'éléments de connexion d'un circuit de ventilation.
La figure 14 est une vue schématique en coupe transversale de deux panneaux adjacents au niveau d'une attache desdits panneaux.

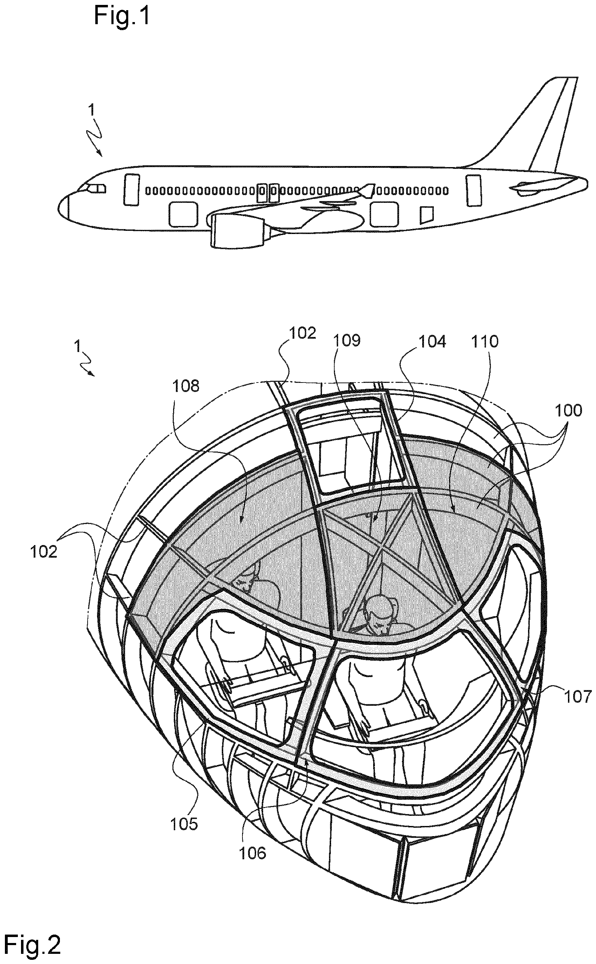

Les panneaux de revêtement mural illustrés sur les figures annexées sont particulièrement adaptés à l'habillage de la pointe avant 1 d'un aéronef tel celui illustré sur la figure 1. On aperçoit sur la figure 2 la structure primaire d'une telle pointe avant qui comprend notamment des cadres 100 et des longerons 102. On distingue également sur cette figure 2 des panneaux de revêtement mural 104 à 110 de formes diverses. Ces panneaux sont agencés à l'intérieur de l'enveloppe formée par la structure primaire et la peau (ici retirée) de l'aéronef. Ils sont représentés avec des nuances de gris comme étant presque transparents afin de montrer schématiquement l'intérieur du cockpit.

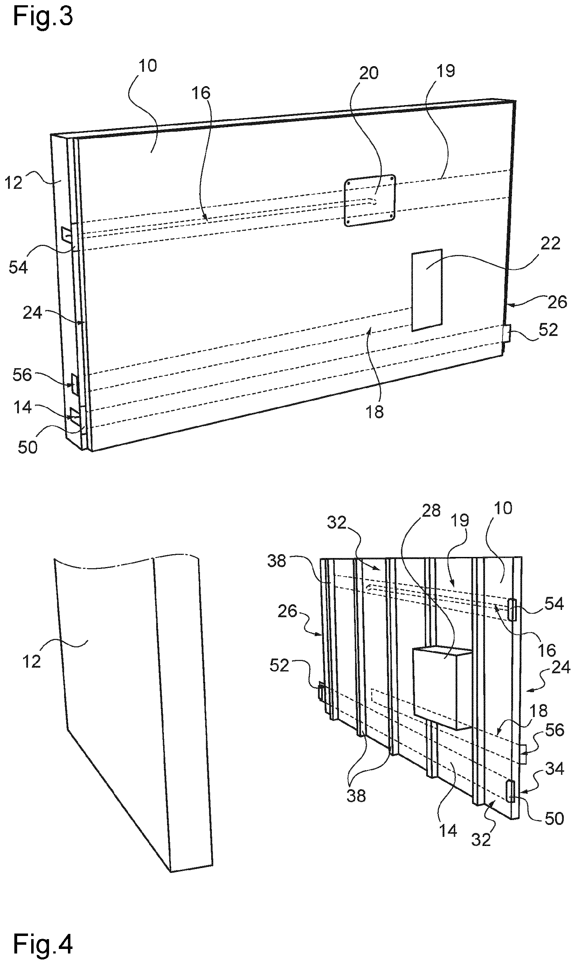

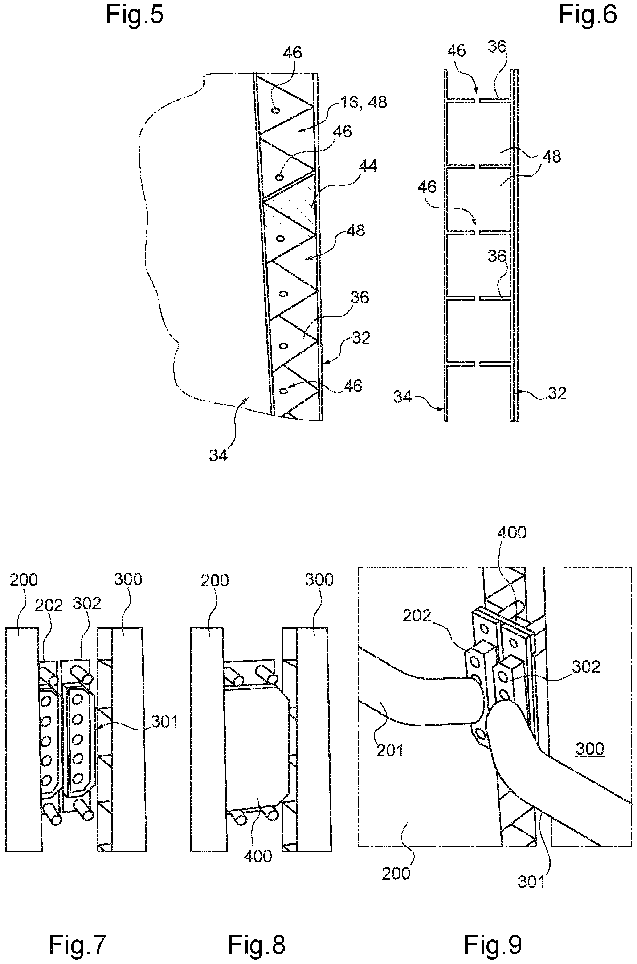

Un panneau de revêtement mural comprend une ossature porteuse 10 et un matelas isolant 12 (voir figures 3 et 4). L'ossature porteuse 10 comporte une plaque cellulaire présentant une face avant 34 lisse et une face arrière 32 lisse entre lesquelles s'étendent des ailettes 36 (voir aussi figures 5 et 6). La face avant reçoit un décor, qui peut être un motif en relief directement obtenu par impression 3D au moment de la fabrication de l'ossature porteuse, ou qui peut être un film adhésif texturé rapporté sur l'ossature après sa fabrication ; une peinture de finition peut être prévue pour terminer le décor. La plaque cellulaire est renforcée par des nervures 38 sur sa face arrière 32 (voir figure 4). Les ailettes 36 sont percées de trous 46 pour le drainage des eaux de condensation.

Le panneau de revêtement mural illustré sur les figures 3 et 4 comprend de plus une portion de route électrique traversante (câble non représenté) logée dans un conduit 14 de la plaque cellulaire, qui s'étend d'un premier bord vertical 24 du panneau au bord vertical opposé 26. À noter que les termes "vertical" "horizontal", etc., font référence à l'orientation du panneau tel qu'illustré sur les figures, qui n'est pas nécessairement l'orientation de celui-ci lorsqu'il est installé dans la pointe avant de l'aéronef.

Le panneau illustré sur les figures 3 et 4 comprend également une portion de route électrique 16 terminale (c'est-à-dire non traversante), qui commence au premier bord 24 et se termine à un équipement de sortie intégrée dans l'ossature porteuse 10, en l'occurrence un dispositif d'éclairage 20. Cette portion de route électrique est constituée d'un câble électrique 16 qui est logé dans un conduit 19 de la plaque cellulaire. Bien que la portion de route soit une portion terminale, le conduit 19 qui la reçoit peut être traversant c'est-à-dire s'étendre du bord 24 au bord 26 opposé (comme illustré) ; en variante, il peut s'arrêter au dispositif d'éclairage 20.

Le panneau illustré sur les figures 3 et 4 comprend de plus une portion de route de ventilation 18 terminale (non traversante) qui commence elle aussi au premier bord 24 et se termine dans une bouche de ventilation 22 (équipement de sortie). Cette portion de route de ventilation 18 terminale est formée à l'intérieur même de l'ossature porteuse 10 par un conduit délimité par deux ailettes internes 36 horizontales successives de l'ossature porteuse.

Les ailettes internes de la plaque cellulaire peuvent ainsi délimiter des conduits horizontaux, mais aussi verticaux (non représentés), une multitude de géométries étant possible dès lors que la tenue mécanique de l'ossature porteuse et du panneau de revêtement mural n'est pas menacée. Les conduits de la plaque cellulaire qui ne sont pas utilisés à titre de portion de route de ventilation (ou autre circulation de fluide) et qui ne reçoivent pas une portion de route électrique sont fermés par des cabochons 44 au niveau des bords de l'ossature porteuse (un seul cabochon est représenté sur la figure 5 afin de pouvoir visualiser les ailettes internes 36 de la plaque cellulaire). Si l'ossature porteuse est obtenue par impression 3D, en l'état actuel de la technologie de l'impression 3D il reste plus simple de rapporter des cabochons obturants 44 (pour faciliter l'évacuation des résidus d'impression). Si les évolutions de la technologie le permettent, dans le futur ceux-ci pourront avantageusement faire directement partie de la pièce principale, c'est-à-dire être imprimés en même temps que le reste de l'ossature porteuse.

Si nécessaire, en plus des portions de route logées ou directement formées dans l'ossature porteuse du panneau, il est aussi possible de prévoir des portions de route de ventilation ou des portions de route électrique formées par des tuyaux ou câbles rapportés sur la face arrière 32 de l'ossature porteuse. Dans ce cas, il convient de prévoir des encoches dans le matelas isolant, dans lesquelles viendront se loger lesdites portions de route (tuyaux ou câbles).

Le panneau de revêtement mural illustré à la figure 4 comprend aussi un coffret de stockage 28 contre la face arrière 32 de son ossature porteuse 10. Une trappe (non représentée) peut être prévue sur la face avant 34 de l'ossature porteuse pour accéder à l'intérieur de ce boîtier.

Pour chaque portion de route, des éléments de connexion sont prévus en bordure du panneau de revêtement mural pour la connexion de la portion de route à une portion de route amont portée par un panneau adjacent et, le cas échéant, à une éventuelle portion de route aval portée par un autre panneau adjacent.

Ainsi par exemple, la portion de route électrique 14 traversante comprend une prise de connexion électrique amont 50 au niveau du premier bord 24 de l'ossature porteuse et une prise de connexion électrique aval 52 au niveau du deuxième bord 26 de l'ossature porteuse ; la portion de route électrique terminale 16 comprend une prise de connexion électrique amont 54 (très schématiquement matérialisée sur les figures 3 et 4) au niveau du premier bord 24 (s'agissant d'une portion de route terminale, il n'y a pas d'élément de connexion aval) ; la portion de route de ventilation 18 terminale comprend un raccord amont 56 au niveau du premier bord 24 (pas de raccord aval au niveau du bord 26 puisqu'il s'agit d'une portion de route terminale).

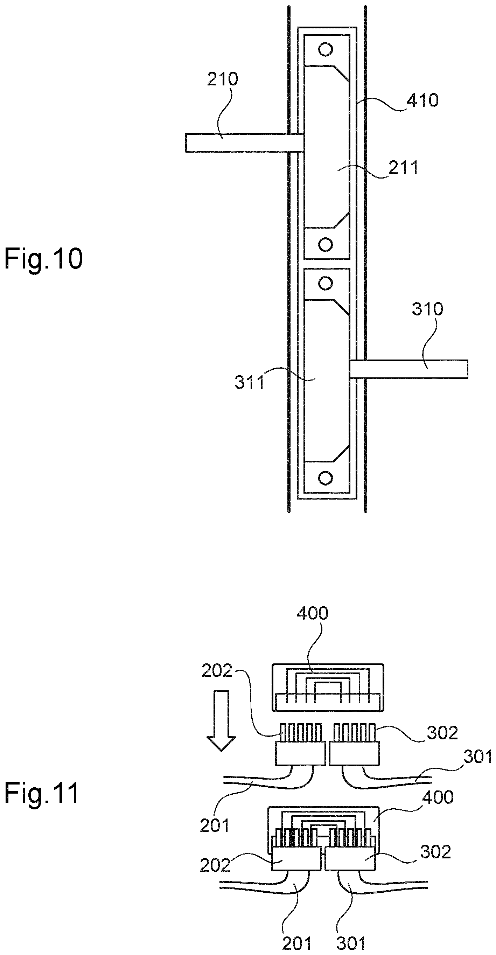

Les figures 7 à 11 illustrent des éléments de connexion électrique entre deux panneaux adjacents. Par souci de clarté, les matelas isolants de ces deux panneaux ne sont pas représentés ; seules apparaissent les ossatures porteuses 200 et 300 et les portions de route électrique 201 et 301 à connecter. Chaque portion de route électrique 201, 301 possède à son extrémité une prise de connexion 202, 302 agencée sur le bord de l'ossature porteuse du panneau de revêtement mural correspondant. Lorsque les panneaux sont mis en place, les deux prises de connexion 202, 302 se retrouvent accolées côte à côte comme illustré à la figure 7. Pour relier les deux portions de route 201, 301, on utilise un connecteur de jonction 400 (voir figure 8) qui vient coiffer les prises de connexion 202, 302. Lorsqu'il est emboîté sur les deux prises de connexion, le connecteur de jonction 400 assure la continuité électrique entre les deux prises 202, 302 de connexion comme on peut l'observer à la figure 11 (partie basse de la figure). À noter que les prises de connexion 202, 302 et le connecteur de jonction 400 sont des "éléments de connexion" au sens des revendications annexées.

Dans l'exemple qui vient d'être décrit, les deux prises de connexion sont agencées côte à côte. En variante (voir figure 10), il est possible de prévoir des portions de route électrique à connecter 210, 310 qui sont décalées en hauteur de façon à ce que leurs prises de connexion 211, 311 se retrouvent l'une au-dessus de l'autre (c'est-à-dire l'une à la suite de l'autre suivant une direction longeant le bord du panneau) lorsque les panneaux adjacents sont mis en place. Un connecteur de jonction allongé 410 qui recouvre les deux prises de connexion sur toute leur hauteur doit alors être utilisé. Cet agencement permet de limiter l'écartement entre les ossatures porteuses des deux panneaux adjacents et de limiter l'ampleur et faciliter le traitement des ponts thermiques qui apparaissent à la jonction entre les panneaux de revêtement mural.

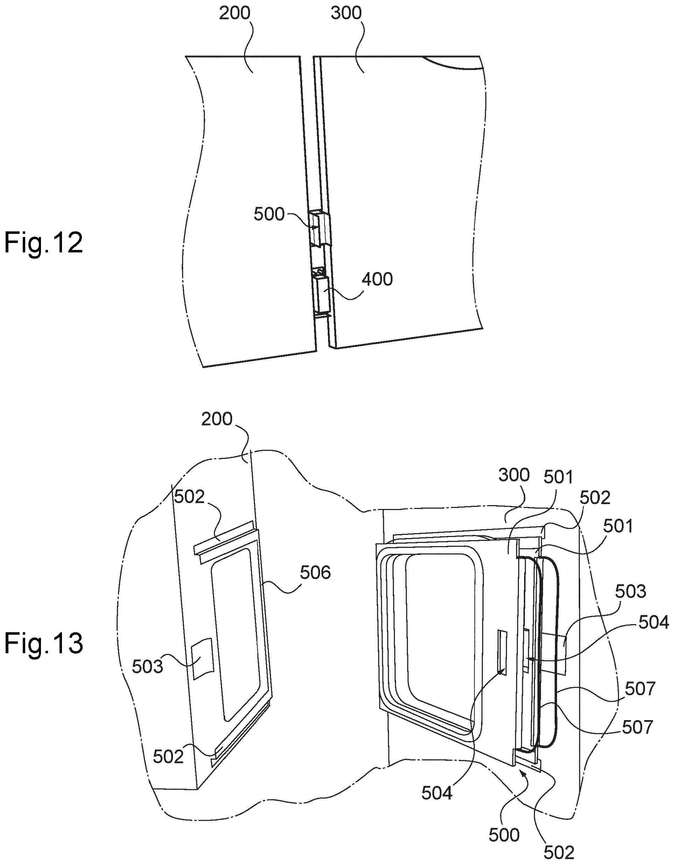

Les figures 12 et 13 illustrent des éléments de connexion de ventilation entre deux panneaux adjacents. Par souci de clarté, là encore, les matelas isolants de ces deux panneaux ne sont pas représentés. On aperçoit sur la figure 12 à la fois les éléments de connexion électrique précédemment décrit, dont le connecteur de liaison 400, et un raccord de de ventilation 500 inséré entre la tranche de l'ossature porteuse 300 d'un panneau intégrant une portion de route de ventilation amont et la tranche de l'ossature porteuse 200 d'un panneau intégrant une portion de route de ventilation aval. Comme précédemment expliqué, selon l'invention, le circuit de ventilation est formé par des conduits délimités par les ailettes internes des ossatures porteuses des panneaux de revêtement mural.

Au niveau du bord de chaque panneau, l'extrémité du conduit formant portion de route de ventilation est pourvue d'un cadre sur la tranche de l'ossature porteuse. Ce cadre porte deux glissières 502 parallèles (voir figure 13) et une languette de verrouillage 503 souple à déformation élastique dont une extrémité est fixée sur le cadre et dont l'autre extrémité est libre. Les glissières 502 et la languette de verrouillage 503 constituent des éléments de connexion au sens des revendications annexées. Ces éléments de connexion comprennent de plus un raccord 500 comportant deux plaques d'extrémité 501 entre lesquelles s'étend un tube souple 502 compressible. Chaque plaque d'extrémité est configurée de façon à pouvoir être insérée dans les glissières 502 de l'un des panneaux.

Pour garantir le bon positionnement du raccord 500, une glissière de butée 506 et un système de verrouillage (incluant la languette de verrouillage 503) sont prévus : chaque plaque d'extrémité 501 vient en butée dans la glissière de butée 506 lorsque le raccord 500 est glissé jusqu'au bout dans les glissières 502 ; par ailleurs, chaque plaque d'extrémité 501 est pourvue d'une fente 504 destinée à recevoir l'extrémité libre de la languette de verrouillage 503 lorsque le raccord 500 est en position de verrouillage (complètement inséré dans les glissières 502 et 506). Pour faciliter la manipulation et la mise en place du raccord 500, de fines poignées 507 peuvent être prévues.

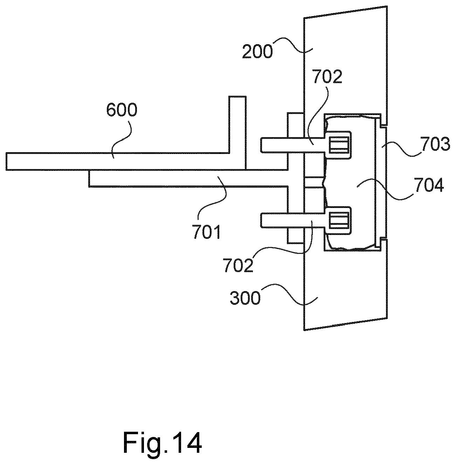

L'installation des panneaux de revêtement mural selon l'invention est extrêmement simple et rapide. Chaque panneau est présenté devant son emplacement définitif et l'ossature porteuse du panneau est fixée à la structure primaire de l'aéronef en un nombre limité de points de fixation, à l'aide d'attaches telles celle illustrée à la figure 14 (sur cette figure, là encore, le matelas isolant des panneaux n'est pas représenté).

À titre d'exemple, chacun des quatre coins d'un panneau selon invention peut être fixé à un cadre 600 de la structure primaire à l'aide d'une ferrure 701 et d'une vis de fixation 702. Dans l'exemple illustré, la ferrure 701 sert à la fixation de deux panneaux 200, 300 adjacents. Elle comporte en effet une âme fixée au cadre 600 et deux ailes recevant chacune une vis de fixation 702, l'une des vis servant à la fixation d'un premier panneau 200, l'autre vis servant à la fixation du deuxième panneau 300.

Une bande de jonction esthétique 703 assure la finition esthétique entre les deux panneaux. Pour assurer la continuité de l'isolation thermique et phonique entre les deux panneaux adjacents et limiter ainsi les ponts thermiques entre la structure et le cockpit, deux solutions peuvent être prévues. Comme on peut l'observer sur la figure 3, le matelas isolant 12 de chaque panneau peut déborder avantageusement de l'ossature porteuse 10 de façon à combler l'espace résiduel entre les ossatures porteuses des panneaux adjacents (cet espace résiduel résulte de la présence des connecteurs de jonction électrique 400 et/ou des raccords de ventilation 500 entre panneaux). La portion d'isolation en saillie est de préférence souple et compressible (le reste du matelas isolant 12 étant de préférence rigide) afin de faciliter la mise en place des panneaux et des connecteurs ou raccords et de garantir la continuité de l'isolation). En variante ou en combinaison, une bande d'isolation complémentaire 704 est insérée derrière la bande de jonction esthétique 703.

L'invention s'étend à toute variante accessible à l'homme du métier c'est-à-dire entrant dans le cadre délimité par les revendications annexées.

## Revendications

1. Panneau de revêtement mural pour aéronef, l'aéronef ayant une structure primaire, le panneau comprenant :
- une ossature porteuse (10) rigide ;
- un décor porté par l'ossature porteuse (10) ;
- un matelas isolant phonique et thermique (12), fixé à l'ossature porteuse ;
- des attaches (701, 702) pour la fixation de l'ossature porteuse (10) du panneau à des éléments (600) de la structure primaire de l'aéronef ;
le panneau étant en outre tel que :
- l'ossature porteuse, le décor et le matelas isolant forment un ensemble solidaire autoportant avant son intégration dans un aéronef ;
- l'ossature porteuse comprend une plaque cellulaire présentant une face arrière (32) et une face avant (34) séparées par des ailettes internes (36),
les ailettes (36) s'étendent entre la face arrière (32) et la face avant (34) de la plaque cellulaire, lesdites ailettes (36), ladite face arrière (32) et ladite face avant (34) délimitant des conduits adaptés pour constituer des portions de route de circuit de fluide, dites portions de route fluidique, et lesdites ailettes (36), ladite face arrière (32) et ladite face avant (34) délimitant des conduits adaptés pour recevoir des portions de route électriques, au moins l'une des portions de route fluidique et au moins l'une des portions de route électrique du panneau s'étendant d'un premier bord (24) à un deuxième bord (26) du panneau en traversant ledit panneau, le panneau comprenant :
- un premier élément de connexion dans le premier bord (24) pour la connexion de ladite portion de route fluidique à une portion de route fluidique amont du même circuit portée par un panneau adjacent ;
- un deuxième élément de connexion dans le deuxième bord (26) pour la connexion de ladite portion de route fluidique à une portion de route fluidique aval du même circuit portée par un panneau adjacent ;
- un premier élément de connexion dans le premier bord (24) pour la connexion de ladite portion de route électrique à une portion de route électrique amont du même circuit portée par un panneau adjacent ; et
- un deuxième élément de connexion dans le deuxième bord (26) pour la connexion de ladite portion de route électrique à une portion de route électrique aval du même circuit portée par un panneau adjacent.

2. Panneau de revêtement mural selon la revendication 1,
tel que le panneau intègre au moins un équipement de sortie (22) et l'une des portions de route fluidique (18) s'étend du premier bord à l'équipement de sortie, le circuit se terminant alors dans le panneau par cette portion de route (18) et cet équipement de sortie (22).

3. Panneau de revêtement mural selon l'une des revendications 1 ou 2, tel que les ailettes internes (36) sont percées de trous de drainage (46) permettant une communication entre cellules voisines de la plaque cellulaire.

4. Panneau de revêtement mural selon l'une des revendications 1 à 3, tel que l'ossature porteuse (10) comprend des nervures de renfort mécanique (38) sur la face arrière (32) de la plaque cellulaire.

5. Panneau de revêtement mural selon l'un des revendications 1 à 4, tel que la plaque cellulaire est obtenue par impression 3D.

6. Panneau de revêtement mural selon l'une des revendications 1 à 5, tel que les conduits de la plaque cellulaire qui ne sont pas utilisés comme portion de route fluidique sont fermés par des cabochons (44) au niveau des bords de l'ossature porteuse.

7. Panneau de revêtement mural selon l'une des revendications 1 à 6, tel que le matelas isolant (12) est un bloc de mousse rigide, muni à sa périphérie d'une bande de mousse souple formant joint.

8. Aéronef comprenant une pointe avant équipée de panneaux selon l'une des revendications 1 à 7.

9. Aéronef selon la revendication 8, tel qu'il comprend une structure primaire et en ce que l'ossature porteuse (10) de chaque panneau est fixée à la structure primaire de l'aéronef en quatre points d'attache, répartis à quatre coins du panneau.

10. Aéronef selon l'une des revendications 8 ou 9, tel qu'il comprend des bandes de jonction (703) pourvues d'un complément d'isolation (704) entre panneaux adjacents.

## Patentansprüche

1. Wandverkleidungsplatte für ein Luftfahrzeug, wobei das Luftfahrzeug eine Primärstruktur aufweist, wobei die Platte umfasst:
- ein starres, tragendes Gerüst (10);
- ein von dem tragenden Gerüst (10) getragenes Dekor;
- eine akustisch und thermisch isolierende Matte (12), die an dem tragenden Gerüst fixiert ist;
- Befestigungen (701, 702) zur Fixierung des tragenden Gerüsts (10) der Platte an Elementen (600) der Primärstruktur des Luftfahrzeugs;
wobei die Platte des Weiteren derart ist:
- das tragende Gerüst, das Dekor und die isolierende Matte bilden vor ihrer Integration in das Luftfahrzeug eine einstückige, selbsttragende Gesamtheit;
- das tragende Gerüst umfasst eine zelluläre Tafel, die eine hintere Fläche (32) und eine vordere Fläche (34) aufweist, die durch interne Rippen (36) getrennt sind,
wobei sich die Rippen (36) zwischen der hinteren Fläche (32) und der vorderen Fläche (34) der zellulären Tafel erstrecken, wobei die Rippen (36), die hintere Fläche (32) und die vordere Fläche (34) Leitungen abgrenzen, die angepasst sind, um Abschnitte einer Fluidkreislaufstrecke, sogenannte Abschnitte der fluidischen Strecke, zu konstituieren, und wobei die Rippen (36), die hintere Fläche (32) und die vordere Fläche (34) Leitungen abgrenzen, die angepasst sind zum Aufnehmen von Abschnitten der elektrischen Strecke, wobei mindestens einer der Abschnitte der fluidischen Strecke und mindestens einer der Abschnitte der elektrischen Strecke der Platte sich von einem ersten Rand (24) zu einem zweiten Rand (26) der Platte erstrecken, indem sie die Platte durchqueren, wobei die Platte umfasst:
- ein erstes Verbindungselement in dem ersten Rand (24) zur Verbindung des Abschnitts der fluidischen Strecke mit einem Abschnitt der fluidischen Strecke stromaufwärts des gleichen Kreislaufs, der von einer angrenzenden Platte getragen wird;
- ein zweites Verbindungselement in dem zweiten Rand (26) zur Verbindung des Abschnitts der fluidischen Strecke mit einem Abschnitt der fluidischen Strecke stromabwärts des gleichen Kreislaufs, der von einer angrenzenden Platte getragen wird;
- ein erstes Verbindungselement in dem ersten Rand (24) zur Verbindung des Abschnitts der elektrischen Strecke mit einem Abschnitt der elektrischen Strecke stromaufwärts des gleichen Kreislaufs, der von einer angrenzenden Platte getragen wird; und
- ein zweites Verbindungselement in dem zweiten Rand (26) zur Verbindung des Abschnitts der elektrischen Strecke mit einem Abschnitt der elektrischen Strecke stromabwärts des gleichen Kreislaufs, der von einer angrenzenden Platte getragen wird.

2. Wandverkleidungsplatte nach Anspruch 1,
derart, dass die Platte mindestens ein Ausgabegerät (22) beinhaltet und einer der Abschnitte der fluidischen Strecke (18) sich von dem ersten Rand bis zu dem Ausgabegerät erstreckt, wobei der Kreislauf dann durch diesen Abschnitt der Strecke (18) und dieses Ausgabegerät (22) in der Platte endet.

3. Wandverkleidungsplatte nach einem der Ansprüche 1 oder 2,
derart, dass die internen Rippen (36) mit Drainagelöchern (46) durchbohrt sind, die eine Kommunikation zwischen angrenzenden Zellen der zellulären Tafel erlauben.

4. Wandverkleidungsplatte nach einem der Ansprüche 1 bis 3,
derart, dass das tragende Gerüst (10) Stege (38) zur mechanischen Verstärkung auf der hinteren Fläche (32) der zellulären Tafel umfasst.

5. Wandverkleidungsplatte nach einem der Ansprüche 1 bis 4,
derart, dass die zelluläre Tafel durch 3D-Druck erhalten wird.

6. Wandverkleidungsplatte nach einem der Ansprüche 1 bis 5,
derart, dass die Leitungen der zellulären Tafel, die nicht als Abschnitt der fluidischen Strecke verwendet werden, auf Höhe der Ränder des tragenden Gerüsts durch Kappen (44) verschlossen sind.

7. Wandverkleidungsplatte nach einem der Ansprüche 1 bis 6,
derart, dass die isolierende Matte (12) ein Block aus Hartschaum ist, der an seinem Umfang mit einem Streifen aus Weichschaum versehen ist, der eine Dichtung bildet.

8. Luftfahrzeug, umfassend einen vorderen Endabschnitt, der mit Platten nach einem der Ansprüche 1 bis 7 ausgestattet ist.

9. Luftfahrzeug nach Anspruch 8,
derart, dass es eine Primärstruktur umfasst und dass das tragende Gerüst (10) von jeder Platte an der Primärstruktur des Luftfahrzeugs an vier Befestigungspunkten, verteilt auf vier Ecken der Platte, befestigt ist.

10. Luftfahrzeug nach einem der Ansprüche 8 oder 9,
derart, dass es zwischen angrenzenden Platten Verbindungsstreifen (703) umfasst, die mit einem Isolationszusatz (704) versehen sind.

## Claims

1. A wall covering panel for aircraft, the aircraft having a primary structure, the panel comprising:
- a rigid supporting framework (10);
- a decor carried by the supporting framework (10);
- a soundproofing and thermal insulation mat (12), attached to the supporting framework;
- attachments (701, 702) for fastening the supporting framework (10) of the panel to elements (600) of the primary structure of the aircraft;
the panel further being such that:
- the supporting framework, the decor and the insulation mat form a self-supporting unit prior to its integration into an aircraft;
- the supporting framework comprises a cellular plate with a rear face (32) and a front face (34) separated by internal fins (36),
the fins (36) extend between the rear face (32) and the front face (34) of the cellular plate, said fins (36), said rear face (32) and said front face (34) delimiting ducts adapted to constitute fluid circuit route portions, said fluidic route portions, and said fins (36), said rear face (32) and said front face (34) delimiting ducts adapted to receive electrical route portions, at least one of the fluidic route portions and at least one of the electrical route portions of the panel extending from a first edge (24) to a second edge (26) of the panel through said panel, the panel comprising :
- a first connection element in the first edge (24) for connecting said fluidic route portion to an upstream fluidic route portion of the same circuit carried by an adjacent panel;
- a second connection element in the second edge (26) for connecting said fluidic route portion to a downstream fluidic route portion of the same circuit carried by an adjacent panel;
- a first connection element in the first edge (24) for connecting said electrical route portion to an upstream electrical route portion of the same circuit carried by an adjacent panel; and
- a second connection element in the second edge (26) for connection of said electrical route portion to a downstream electrical route portion of the same circuit carried by an adjacent panel.

2. The wall covering panel according to claim 1, such that the panel incorporates at least one output equipment (22) and one of the fluidic route portions (18) extends from the first edge to the output device, the circuit then terminating in the panel via this route portion (18) and this output equipment (22).

3. The wall covering panel according to one of claims 1 or 2, such that the internal fins (36) are pierced with drainage holes (46) allowing communication between adjacent cells of the cellular plate.

4. The wall covering panel according to one of claims 1 to 3, such that the supporting framework (10) comprises mechanical reinforcement ribs (38) on the rear face (32) of the cellular plate.

5. The wall covering panel according to one of claims 1 to 4, such that the cellular plate is obtained by 3D printing.

6. The wall covering panel according to one of claims 1 to 5, such that the ducts of the cellular plate which are not used as a portion of the fluidic route are closed by cabochons (44) at the edges of the supporting framework.

7. The wall covering panel according to one of claims 1 to 6, such that the insulation mat (12) is a rigid foam block, provided at its periphery with a flexible foam strip forming a joint.

8. An aircraft comprising a nose cone equipped with panels according to one of claims 1 to 7.

9. The aircraft according to claim 8, such that it comprises a primary structure and in that the supporting framework (10) of each panel is fixed to the primary structure of the aircraft at four attachment points, distributed at four corners of the panel.

10. The aircraft according to one of claims 8 or 9, such that it comprises junction strips (703) provided with additional insulation (704) between adjacent panels.
